# EUROPÄISCHE PATENTSCHRIFT

(11) **EP 1 667 525 B1**
(45) Veröffentlichungstag und Bekanntmachung des Hinweises auf die Patenterteilung: **19.12.2012**
(21) Anmeldenummer: 04765044.5
(22) Anmeldetag: 10.09.2004
(51) Int. Cl.: A01N 43/653, A01N 37/50, A01N 25/30, A01N 43/88, A01N 25/04

(54) **SUSPENSIONSKONZENTRATE**
CONCENTRATED SUSPENSIONS
SUSPENSIONS CONCENTREES

(30) Priorität: 23.09.2003 DE 10343872
(43) Veröffentlichungstag der Anmeldung: 14.06.2006
(73) Patentinhaber: Bayer CropScience AG, 40789 Monheim (DE)
(72) Erfinder: VERMEER, Ronald, 51371 Leverkusen (DE)
(86) Internationale Anmeldenummer: PCT/EP2004/010114
(87) Internationale Veröffentlichungsnummer: WO 2005/036963

(56) Entgegenhaltungen:
- WO-A-00/35284
- WO-A-02/19821
- WO-A-98/00009
- WO-A-03/037084

## Beschreibung

Die Erfindung betrifft Suspensionskonzentrate von bestimmten agrochemischen Wirkstoffen, ein Verfahren zur Herstellung dieser Formulierungen und deren Verwendung zur Applikation der enthaltenen Wirkstoffe.

Es sind bereits zahlreiche Suspensionskonzentrate von agrochemischen Wirkstoffen bekannt geworden. So wurden schon Suspensionskonzentrate von Tebuconazol beschrieben, die neben diesem fungiziden Wirkstoff und üblichen Additiven auch Alkalimetallsulfosuccinate als Formulierungshilfsmittel enthalten (vgl. EP-A 0 897 665). Die biologische Wirksamkeit der aus diesen Suspensionskonzentraten hergestellten, anwendungsfertigen Spritzmittel ist gut. Nachteilig ist aber, dass deren Wirksamkeit schwächer ist als diejenige von Spritzmitteln, die durch Verdünnung entsprechender Emulsionskonzentrate mit Wasser zugänglich sind.

WO-A-2000/035284 offenbart wässrig Suspensionskonzentrate enthaltend ein Triazol sowie weitere Hilfs- und Zusatzstoffe. WO-A-2000/035284 lehrt jedoch nicht den Einsatz der speziellen Penetrationsförderer der Formel (I) aus der Gruppe der Alkanolethoxylate.

WO-A-2002/019821 offenbart wässrige Suspensionskonzentrate enthaltend agrochemische Wirkstoffe, in denen Naphthalinsulfonat - Formaldehyd - Kondensate als Dispergiermittel eingesetzt werden. WO-A-2002/019821 lehrt nicht die Mischung aus Dispergiermitteln, die als Komponente c) in den erfindungsgemäßen Suspensionskonzentraten enthalten sind.

WO-A-1998/000009 lehrt eine im Wesentlichen Wasser-freie agrochemische Formulierung, nicht aber ein wässriges Suspensionskonzentrat.

Es wurden nun neue Suspensionskonzentrate gefunden, die
a) mindestens einen bei Raumtemperatur festen Wirkstoff aus der Gruppe der Azole und/oder der Strobilurine,
b) mindestens einen Penetrationsförderer aus der Gruppe der Alkanolethoxylate der Formel 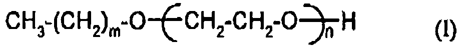 in welcher
   - m: für Zahlen von 9 bis 17 steht und
   - n: für Zahlen von 8 bis 16 steht.
c) mindestens ein Dispergiermittel aus der Gruppe
   der Polymerisate aus 2-Methyl-2-propensäure-methylester und α-(2-Methyl-1-oxo-2-propenyl)-ω-methoxy-poly-(oxy-1,2-ethandiyl),
   der Tristyryl-phenol-ethoxylate und/oder
   der Propylenoxid-Ethylenoxid-Blockcopolymerisate mit Molekulargewichten zwischen 8 000 und 10 000,
d) Wasser sowie
e) gegebenenfalls Zusatzstoffe
enthalten.

Weiterhin wurde gefunden, dass sich die erfindungsgemäßen Suspensionskonzentrate vorteilhaft herstellen lassen, indem man
- zunächst Penetrationsförderer aus der Gruppe (b), Dispergiermittel aus der Gruppe (c) sowie Wasser und gegebenenfalls Zusatzstoffe aus der Gruppe (e) miteinander vermischt,
- dann mindestens einen Wirkstoff aus der Gruppe (a) hinzufügt, die dabei entstehende Suspension durch Mahlen zerkleinert und
- danach Wasser sowie gegebenenfalls weitere Zusatzstoffe hinzugibt.

Schließlich wurde gefunden, dass sich die erfindungsgemäßen Suspensionskonzentrate sehr gut zur Applikation der enthaltenen agrochemischen Wirkstoffe auf Pflanzen eignen.

Es ist als äußerst überraschend zu bezeichnen, dass die aus den erfmdungsgemäßen Suspensionskonzentraten durch Verdünnen mit Wasser herstellbaren Spritzmittel bei der Behandlung von Pflanzen eine deutlich bessere biologische Wirkung zeigen als Spritzmittel, die aus entsprechenden herkömmlichen Suspensionskonzentraten zugänglich sind. Unerwartet ist vor allem, dass die biologische Wirksamkeit von den Spritzmitteln, die durch Verdünnung erfindungsgemäßer Suspensionskonzentrate mit Wasser erhalten werden, an die Wirksamkeit von Spritzmitteln heranreicht, die aus entsprechenden Emulsionskonzentraten zugänglich sind.

Die erfindungsgemäßen Suspensionskonzentrate zeichnen sich durch eine Reihe von Vorteilen aus. So ist deren Herstellung völlig unproblematisch. Vorteilhaft ist weiterhin, dass beim Lagern der erfindungsgemäßen Suspensionskonzentrate weder unerwünschtes Kristallwachstum noch Agglomeration der enthaltenen Partikel eintritt. Ebenso werden beim Verdünnen der erfindungsgemäßen Suspensionskonzentrate mit Wasser keinerlei störende Nebeneffekte beobachtet. Schließlich begünstigen die erfindungsgemäßen Formulierungen die biologische Wirksamkeit der enthaltenen aktiven Komponenten, so dass im Vergleich zu herkömmlichen Suspensions-Zubereitungen entweder eine höhere Wirksamkeit erzielt wird oder weniger Wirkstoff erforderlich ist.

Die erfindungsgemäßen Suspensionskonzentrate enthalten einen oder mehrere feste Wirkstoffe aus der Gruppe der Azole und/oder der Strobilurine.

Als Beispiele für Azole seien in diesem Zusammenhang die folgenden fungizid wirksamen Stoffe genannt:
a) Triazole:
   Azaconazole, Bitertanol, Bromuconazole, Cyproconazole, Diclobutrazole, Difenoconazole, Diniconazole, Epoxiconazole, Etaconazole, Fenbuconazole, Fluquinconazole, Flusilazole, Flutriafol, Hexaconazole, Imibenconazole, Ipconazole, Metconazole, Myclobutanil, Paclebutrazol, Penconazole, Propiconazole, Prothioconazole, Simeconazole, Tebuconazole, Tetraconazole, Triadimefon, Triadimenol, Triticonazole;
   und
b) Imidazole:
   Imazalil, Oxpoconazole Fumarat, Peforazoate, Prochloraz, Triflumizole.

### Bevorzugt sind:

Tebuconazole, Prothioconazole, Triadimefon, Triadimenol, Bitertanol, Diclobutrazole, Propiconazole, Difenoconazole, Cyproconazole, Flutriafol, Hexaconazole, Myclobutanil, Penconaxole, Etaconazole, Bromuconazole, Epoxiconazole, Fenbuconazole, Tetraconazole, Diniconazole, Triticonazole, Flusilazole, Prochloraz, Metconazole, Ipconazole und Fluquinconazole.

Als Beispiele für Strobilurine, die in den erfindungsgemäßen Suspensionskonzentraten vorhanden sein können, seien die folgenden fungizid wirksamen Stoffe genannt:
Azoxystrobin, Dimoxystrobin, Famoxadon, Fenamidon, Fluoxastrobin, Kresoxim-methyl, Metaminostrobin, Picoxystrobin, Pyraclostrobin und Trifloxystrobin.

Bevorzugt sind:
Trifloxystrobin, Fluoxastrobin, Kresoxim-methyl, Azoxystrobin, Picoxystrobin, Pyraclostrobin und Metominostrobin.

Die erfindungsgemäßen Suspensionskonzentrate enthalten einen oder mehrere Penetrationsförderer aus der Gruppe der Alkanolethoxylate der Formel 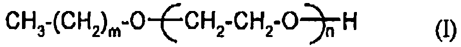
- m: für Zahlen von 9 bis 17 steht und
- n: für Zahlen von 8 bis 16 steht.

Besonders bevorzugt sind Stoffe der Formel (I), in denen
- m: für Zahlen von 9 bis 13 steht und
- n: für Zahlen von 8 bis 12 steht.

Beispielhaft genannt sei Alkanol-ethoxylat der Formel (I), in der
- m: für 11 steht und
- n: für 10 steht.

Hierbei handelt es sich um die Substanz, die unter anderem unter der Bezeichnung Genapol C 100^{®} (Fa. Clariant) käuflich zu haben ist.

Die Alkanolethoxylate sind durch die obigen Formeln allgemein definiert. Bei diesen Substanzen handelt es sich im Allgemeinen um Gemische von Stoffen des angegebenen Typs mit unterschiedlichen Kettenlängen. Für die Indizes errechnen sich deshalb auch Durchschnittswerte, die von ganzen Zahlen abweichen können.

Die Alkanolethoxylate der Formel (I) sind bekannt oder lassen sich nach bekannten Methoden herstellen (vgl. WO 98-35 553, WO 00-35 278 und EP-A 0 681 865).

Die erfindungsgemäßen Suspensionskonzentrate enthalten vorzugsweise ein Gemisch aus zwei verschiedenen Dispergiermitteln aus der Gruppe der unter (c) erwähnten Stoffe. Bevorzugt in Frage kommen dabei die nachstehend genannten Substanzen.

Polymerisat aus 2-Methyl-2-propensäure-methylester und α-(2-Methyl-1-oxo-2-propenyl)-ω-methoxy-poly-(oxy-1,2-ethandiyl) mit der Cas-Nr. 111 740-36-4, das unter der Bezeichnung Atlox 4913^{®} (Fa. Uniqema) im Handel ist.

Weiterhin Tristyryl-phenol-ethoxylate mit durchschnittlich 29 bis 60, vorzugsweise 50 bis 60 Oxyethylen-Einheiten. Außerdem sulfatierte oder phosphatierte Tristyryl-phenol-ethoxylate mit durchschnittlich 29 bis 60, vorzugsweise 50 bis 60 Oxyethylen-Einheiten, sowie Salze dieser Substanzen. Speziell genannte seien die unter den Bezeichnungen Soprophor FLK (Fa. Rhodia), Soprophor TS 54 (Fa. Rhodia) und Soprophor TS 60 (Fa. Rhodia) bekannten Handelsprodukte.

Außerdem Propylenoxid-Ethylenoxid-Blockcopolymerisate mit Molekulargewichten zwischen 8 000 und 10 000 und einem Ethylenoxid-Anteil zwischen 40 und 60 Gewichtsprozent, wobei die unter den Bezeichnungen Pluronic PE 10 100 (Fa. BASF), Pluronic PE 10 500 (Fa. BASF) und Pluronic F 68 (FA. BASF) im Handel befindlichen Produkte beispielhaft aufgeführt seien.

Besonders bevorzugt sind erfindungsgemäße Suspensionskonzentrate, die folgende Dispergiermittelkombinationen enthalten:
Atlox 4913 und Soprophor TS 60,
Atlox 4913 und Pluronic PE 10 500 oder
Pluronic PE 10 500 und Soprophor FLK.

Als Zusatzstoffe, die in den erfindungsgemäßen Suspensionskonzentraten enthalten sein können, kommen Entschäumer, Kältestabilisatoren, Konservierungsmittel, Antioxydantien, Farbstoffe, Pflanzenöle, Verdicker und inerte Füllmaterialien in Frage.

Als schaumhemmende Stoffe kommen alle üblicherweise für diesen Zweck in agrochemischen Mitteln einsetzbaren Substanzen in Betracht. Bevorzugt sind Silikonöle und Magnesiumstearat.

Als Konservierungsmittel kommen alle üblicherweise für diesen Zweck in agrochemischen Mitteln dieses Typs einsetzbaren Substanzen in Frage. Als Beispiele genannt seien Preventol® (Fa. Bayer AG) und Proxel® (Fa. Bayer AG).

Als Antioxydantien kommen alle üblicherweise für diesen Zweck in agrochemischen Mitteln einsetzbaren Substanzen in Betracht. Bevorzugt ist Butylhydroxytoluol.

Als Farbstoffe kommen alle üblicherweise für diesen Zweck in agrochemischen Mitteln einsetzbaren Substanzen in Frage. Beispielhaft genannt seien Titandioxid, Farbruß, Zinkoxid und Blaupigmente sowie Permanentrot FGR.

Als inerte Füllmaterialien kommen alle üblicherweise für diesen Zweck in agrochemischen Mitteln einsetzbaren Substanzen in Betracht, die nicht als Verdickungsmittel fungieren. Bevorzugt sind anorganische Partikel, wie Carbonate, Silikate und Oxide, sowie auch organische Substanzen, wie Harnstoff-Formaldehyd-Kondensate. Beispielhaft erwähnt seien Kaolin, Rutil, Siliciumdioxid, sogenannte hochdisperse Kieselsäure, Kieselgele, sowie natürliche und synthetische Silikate, außerdem Talkum.

Als Pflanzenöle kommen alle üblicherweise in agrochemischen Mitteln einsetzbaren, aus Pflanzen gewinnbaren Öle in Frage. Beispielhaft genannt seien Sonnenblumenöl, Rapsöl, Olivenöl und Sojabohnenöl.

Als Kältestabilisatoren kommen alle üblicherweise für diesen Zweck in agrochemischen Mitteln einsetzbaren Stoffe in Betracht. Beispielhaft genannt seien Harnstoff, Glycerin und Propylenglykol.

Als Verdicker kommen alle üblicherweise für diesen Zweck in agrochemischen Mitteln einsetzbaren Substanzen in Frage. Beispielhaft erwähnt sei das unter der Bezeichnung Kelzane S (Fa. CP Kelco) im Handel befindliche Produkt auf Xanthan-Basis.

Im Übrigen enthalten die erfindungsgemäßen Suspensionskonzentrate auch Wasser.

Der Gehalt an den einzelnen Komponenten kann in den erfindungsgemäßen Suspensionskonzentraten innerhalb eines größeren Bereichs variiert werden. So liegen die Konzentrationen
- an Wirkstoffen aus der Gruppe (a) im Allgemeinen zwischen 10 und 40 Gew.-%, vorzugsweise zwischen 20 und 30 Gew.-%,
- an Penetrationsförderer aus der Gruppe (b) im Allgemeinen zwischen 5 und 20 Gew.-%, vorzugsweise zwischen 10 und 15 Gew.-%,
- an Dispergiermitteln aus der Gruppe (c) im Allgemeinen zwischen 3 und 8 Gew.-%, vorzugsweise zwischen 3 und 5 Gew.-%, und
- an Zusatzstoffen aus der Gruppe (e) im Allgemeinen zwischen 0 und 15 Gew.-%, vorzugsweise zwischen 0 und 13 Gew.-%.

Der Gehalt an Wasser kann in den erfmdungsgemäßen Suspensionskonzentraten in weiten Grenzen variiert werden. Er liegt in Abhängigkeit von den übrigen Komponenten im Allgemeinen zwischen 40 und 65 Gew.-%.

Die erfindungsgemäßen Formulierungen können auch in Mischung mit weiteren bekannten Fungiziden, Bakteriziden, Akariziden, Nematiziden oder Insektiziden verwendet werden, um so z.B. das Wirkungsspektrum zu verbreitern oder Resistenzentwicklungen vorzubeugen.

Als Mischpartner kommen zum Beispiel folgende Verbindungen infrage:
Fungizide:
   2-Phenylphenol; 8-Hydroxyquinoline sulfate; Acibenzolar-S-methyl; Actinovate; Aldimorph; Amidoflumet; Ampropylfos; Ampropylfos-potassium; Andoprim; Anilazine; Benalaxyl; Benodanil; Benomyl; Benthiavalicarb-isopropyl; Benzamacril; Benzamacril-isobutyl; Bilanafos; Binapacryl; Biphenyl; Blasticidin-S; Boscalid; Bupirimate; Buthiobate; Butylamine; Calcium polysulfide; Capsimycin; Captafol; Captan; Carbendazim; Carboxin; Carpropamid; Carvone; Chinomethionat; Chlobenthiazone; Chlorfenazole; Chloroneb; Chlorothalonil; Chlozolinate; cis-1-(4-chlorophenyl)-2-(1H-1,2,4-triazole-1-yl)-cycloheptanol; Clozylacon; Cyazofamid; Cyflufenamid; Cymoxanil; Cyprodinil; Cyprofuram; Dagger G; Debacarb; Dichlofluanid; Dichlone; Dichlorophen; Diclocymet; Diclomezine; Dicloran; Diethofencarb; Diflumetorim; Dimethirimol; Dimethomorph; Dinocap; Diphenylamine; Dipyrithione; Ditalimfos; Dithianon; Dodine; Drazoxolon; Edifenphos; Ethaboxam; Ethirimol; Etridiazole; Fenapanil; Fenfuram; Fenhexamid; Fenitropan; Fenoxanil; Fenpiclonil; Fenpropidin; Fenpropimorph; Ferbam; Fluazinam; Flubenzimine; Fludioxonil; Flumetover; Flumorph; Fluoromide; Flurprimidol; Flusulfamide; Flutolanil; Folpet; Fosetyl-Al; Fosetyl-sodium; Fuberidazole; Furalaxyl; Furametpyr; Furcarbanil; Furmecyclox; Guazatine; Hexachlorobenzene; Hymexazol; Iminoctadine triacetate; Iminoctadine tris(albesilate); Iodocarb; Iprobenfos; Iprodione; Iprovalicarb; Irumamycin; Isoprothiolane; Isovaledione; Kasugamycin; Mancozeb; Maneb; Meferimzone; Mepanipyrim; Mepronil; Metalaxyl; Metalaxyl-M; Methasulfocarb; Methfuroxam; Methyl-1-(2,3-dihydro-2,2-dimethyl-1H-inden-1-yl)-1H-imidazole-5-carboxylate; Methyl-2-[[[cyclopropyl[(4-methoxyphenyl)imino]methyl]thio]methyl]-.alpha.-(methoxymethylene)-benzeneacetate; Methyl-2-[2-[3-(4-chloro-phenyl)-1-methyl-allylideneaminooxymethyl]-phenyl]-3-methoxy-acryläte; Metiram; Metrafenone; Metsulfovax; Mildiomycin; monopotassium carbonate; Myclozolin; N-(3-Ethyl-3,5,5-trimethyl-cyclohexyl)-3-formylamino-2-hydroxy-benzamide; N-(6-methoxy-3-pyridinyl)-cyclopropanecarboxamide; N-butyl-8-(1,1-dimethylethyl)-1-oxaspiro[4.5]decan-3-amine; Natamycin; Nitrothal-isopropyl; Noviflumuron; Ofurace; Orysastrobin; Oxadixyl; Oxolinic acid; Oxycarboxin; Oxyfenthiin; Pencycuron; Penthiopyrad; Phosdiphen; Phthalide; Picobenzamid; Piperalin; Polyoxins; Polyoxorim; Procymidone; Propamocarb; Propanosine-sodium; Propineb; Proquinazid; Pyrazophos; Pyrimethanil; Pyroquilon; Pyroxyfur; Pyrrolnitrine; Quinconazole; Quinoxyfen; Quintozene; Silthiofam; Sodium tetrathiocarbonate; Spiroxamine; Sulfur; Tecloftalam; Tecnazene; Tetcyclacis; Thicyofen; Thifluzamide; Thiophanate-methyl; Thiram; Tiadinil; Tioxymid; Tolclofos-methyl; Tolylfluanid; Triazbutil; Triazoxide; Tricyclamide; Tricyclazole; Tridemorph; Validamycin A; Vinclozolin; Zineb; Ziram; Zoxamide; (2S)-N-[2-[4-[[3-(4-chlorophenyl)-2-propynyl]oxy]-3-methoxyphenyl]ethyl]-3-methyl- 2-[(methylsulfonyl)amino]-butanamide; 1-(1-naphthalenyl)-1H-pyrrole-2,5-dione; 2,3,5,6-tetrachloro-4-(methylsulfonyl)-pyridine; 2,4-Dihydro-5-methoxy-2-methyl-4-[[[[1-[3-(trifluoromethyl)-phenyl]-ethylidene]-amino]-oxy]-methyl]-phenyl]-3H-1,2,3-triazol-3-one; 2-amino-4-methyl-N-phenyl-5-thiazolecarboxamide; 2-chloro-N-(2,3-dihydro-1,1,3-trimethyl-1H-in-den-4-yl)-3-pyridincarboxamide; 3,4,5-trichloro-2,6-pyridinedicarbonitrile; 3-[(3-Bromo-6-fluoro-2-methyl-1H-indol-1-yl)sulfonyl]-N,N-dimethyl-1H-1,2,4-triazole-1-sulfonamide; sowie Kupfersalze und -zubereitungen, wie Bordeaux mixture; Kupfer Hydroxin; Kupfer naphthenat; Kupfer Oxychlorid; Kupfer Sulfat; Cufraneb; Kupferoxid; Mancopper; Oxinecopper:
Bakterizide:
   Bronopol, Dichlorophen, Nitrapyrin, Nickel-dimethyldithiocarbamat, Kasugamycin, Octhilinon, Furancarbonsäure, Oxytetracyclin, Probenazol, Streptomycin, Tecloftalam, Kupfersulfat und andere Kupfer-Zubereitungen.
Insektizide / Akarizide / Nematizide:
   Abamectin, ABG-9008, Acephate, Acequinocyl, Acetamiprid, Acetoprole, Acrinathrin, AKD-1022, AKD-3059, AKD-3088, Alanycarb, Aldicarb, Aldoxycarb, Allethrin, Allethrin 1R-isomers, Alpha-Cypermethrin (Alphamethrin), Amidoflumet, Aminocarb, Amitraz, Avermectin, AZ-60541, Azadirachtin, Azamethiphos, Azinphos-methyl, Azinphos-ethyl, Azocyclotin,
   Bacillus popilliae, Bacillus sphaericus, Bacillus subtilis, Bacillus thuringiensis, Bacillus thuringiensis strain EG-2348, Bacillus thuringiensis strain GC-91, Bacillus thuringiensis strain NCTC-11821, Baculoviren, Beauveria bassiana, Beauveria tenella, Bendiocarb, Benfuracarb, Bensultap, Benzoximate, Beta-Cyfluthrin, Beta-Cypermethrin, Bifenazate, Bifenthrin, Binapacryl, Bioallethrin, Bioallethrin-S-cyclopentyl-isomer, Bioethanomethrin, Biopermethrin, Bioresmethrin, Bistrifluron, BPMC, Brofenprox, Bromophos-ethyl, Bromopropylate, Bromfenvinfos (-methyl), BTG-504, BTG-505, Bufencarb, Buprofezin, Butathiofos, Butocarboxim, Butoxycarboxim, Butylpyridaben,
   Cadusafos, Camphechlor, Carbaryl, Carbofuran, Carbophenothion, Carbosulfan, Cartap, CGA-50439, Chinomethionat, Chlordane, Chlordimeform, Chloethocarb, Chlorethoxyfos, Chlorfenapyr, Chlorfenvinphos, Chlorfluazuron, Chlormephos, Chlorobenzilate, Chloropicrin, Chlorproxyfen, Chlorpyrifos-methyl, Chlorpyrifos (-ethyl), Chlovaporthrin, Chromafenozide, Cis-Cypermethrin, Cis-Resmethrin, Cis-Permethrin, Clocythrin, Cloethocarb, Clofentezine, Clothianidin, Clothiazoben, Codlemone, Coumaphos, Cyanofenphos, Cyanophos, Cycloprene, Cycloprothrin, Cydia pomonella, Cyfluthrin, Cyhalothrin, Cyhexatin, Cypermethrin, Cyphenothrin (1R-trans-isomer), Cyromazine,
   DDT, Deltamethrin, Demeton-S-methyl, Demeton-S-methylsulphon, Diafenthiuron, Dialifos, Diazinon, Dichlofenthion, Dichlorvos, Dicofol, Dicrotophos, Dicyclanil, Diflubenzuron, Dimethoate, Dimethylvinphos, Dinobuton, Dinocap, Dinotefuran, Diofenolan, Disulfoton, Docusat-sodium, Dofenapyn, DOWCO-439,
   Eflusilanate, Emamectin, Emamectin-benzoate, Empenthrin (1R-isomer), Endosulfan, Entomopthora spp., EPN, Esfenvalerate, Ethiofencarb, Ethiprole, Ethion, Ethoprophos, Etofenprox, Etoxazole, Etrimfos,
   Famphur, Fenamiphos, Fenazaquin, Fenbutatin oxide, Fenfluthrin, Fenitrothion, Fenobucarb, Fenothiocarb, Fenoxacrim, Fenoxycarb, Fenpropathrin, Fenpyrad, Fenpyrithrin, Fenpyroximate, Fensulfothion, Fenthion, Fentrifanil, Fenvalerate, Fipronil, Flonicamid, Fluacrypyrim, Fluazuron, Flubenzimine, Flubrocythrinate, Flucycloxuron, Flucythrinate, Flufenerim, Flufenoxuron, Flufenprox, Flumethrin, Flupyrazofos, Flutenzin (Flufenzine), Fluvalinate, Fonofos, Fonnetanate, Formothion, Fosmethilan, Fosthiazate, Fubfenprox (Fluproxyfen), Furathiocarb,
   Gamma-HCH, Gossyplure, Grandlure, Granuloseviren,
   Halfenprox, Halofenozide, HCH, HCN-801, Heptenophos, Hexaflumuron, Hexythiazox, Hydramethylnone, Hydroprene,
   IKA-2002, Imidacloprid, Imiprothrin, Indoxacarb, Iodofenphos, Iprobenfos, Isazofos, Isofenphos, Isoprocarb, Isoxathion, Ivermectin,
   Japonilure,
   Kadethrin, Kempolyederviren, Kinoprene,
   Lambda-Cyhalothrin, Lindane, Lufenuron,
   Malathion, Mecarbam, Mesulfenfos, Metaldehyd, Metam-sodium, Methacrifos, Methamidophos, Metharhizium anisopliae, Metharhizium flavoviride, Methidathion, Methiocarb, Methomyl, Methoprene, Methoxychlor, Methoxyfenozide, Metolcarb, Metoxadiazone, Mevinphos, Milbemectin, Milbemycin, MKI-245, MON-45700, Monocrotophos, Moxidectin, MTI-800,
   Naled, NC-104, NC-170, NC-184, NC-194, NC-196, Niclosamide, Nicotine, Nitenpyram, Nithiazine, NNI-0001, NNI-0101, NNI-0250, NNI-9768, Novaluron, Noviflumuron,
   OK-5101, OK-5201, OK-9601, OK-9602, OK-9701, OK-9802, Omethoate, Oxamyl, Oxydemeton-methyl,
   Paecilomyces fumosoroseus, Parathion-methyl, Parathion (-ethyl), Permethrin (cis-, trans-), Petroleum, PH-6045, Phenothrin (IR-trans isomer), Phenthoate, Phorate, Phosalone, Phosmet, Phosphamidon, Phosphocarb, Phoxim, Piperonyl butoxide, Pirimicarb, Pirimiphosmethyl, Pirimiphos-ethyl, Prallethrin, Profenofos, Promecarb, Propaphos, Propargite, Propetamphos, Propoxur, Prothiofos, Prothoate, Protrifenbute, Pymetrozine, Pyraclofos, Pyresmethrin, Pyrethrum, Pyridaben, Pyridalyl, Pyridaphenthion, Pyridathion, Pyrimidifen, Pyriproxyfen,
   Quinalphos,
   Resmethrin, RH-5849, Ribavirin, RU-12457, RU-15525,
   S-421, S-1833, Salithion, Sebufos, SI-0009, Silafluofen, Spinosad, Spirodiclofen, Spiromesifen, Sulfluramid, Sulfotep, Sulprofos, SZI-121,
   Tau-Fluvalinate, Tebufenozide, Tebufenpyrad, Tebupirimfos, Teflubenzuron, Tefluthrin, Temephos, Temivinphos, Terbam, Terbufos, Tetrachlorvinphos, Tetradifon, Tetramethrin, Tetramethrin (1R-isomer), Tetrasul, Theta-Cypermethrin, Thiacloprid, Thiamethoxam, Thiapronil, Thiatriphos, Thiocyclam hydrogen oxalate, Thiodicarb, Thiofanox, Thiometon, Thiosultap-sodium, Thuringiensin, Tolfenpyiad, Tralocythrin, Tralomethrin, Transfluthrin, Triarathene, Triazamate, Triazophos, Triazuron, Trichlophenidine, Trichlorfon, Triflumuron, Trimethacarb,
   Vamidothion, Vaniliprole, Verbutin, Verticillium lecanii,
   WL-108477, WL-40027,
   YI-5201, YI-5301, YI-5302,
   XMC, Xylylcarb,
   ZA-3274, Zeta-Cypermethrin, Zolaprofos, ZXI-8901,
die Verbindung 3-Methyl-phenyl-propylcarbamat (Tsumacide Z),
die Verbindung 3-(5-Chlor-3-pyridinyl)-8-(2,2,2-trifluorethyl)-8-azabicyclo[3.2.1]octan-3-carbonitril (CAS-Reg.-Nr. 185982-80-3) und das entsprechende 3-endo-Isomere (CAS-Reg.-Nr. 185984-60-5) (vgl. WO-96/37494, WO-98/25923),
sowie Präparate, welche insektizid wirksame Pflanzenextrakte, Nematoden, Pilze oder Viren enthalten.

Auch eine Mischung mit anderen bekannten Wirkstoffen, wie Herbizide, oder mit Düngemitteln und Wachstumsregulatoren, Safenem bzw. Semiochemicals ist möglich.

Die Herstellung der erfindungsgemäßen Suspensionskonzentrate erfolgt im Allgemeinen in der Weise, dass man
- in einem ersten Schritt Penetrationsförderer aus der Gruppe (b), Dispergiermittel aus der Gruppe (c), etwa die Hälfte der benötigten Menge an Wasser sowie gegebenenfalls Zusatzstoffe aus der Gruppe (e) in den jeweils gewünschten Mengen miteinander vermischt und zu einer homogenen Lösung verrührt,
- dann in einem zweiten Schritt einen oder mehrere Wirkstoffe aus der Gruppe (a) unter Rühren hinzufügt und die dabei anfallende Suspension durch Mahlen auf die jeweils gewünschte Teilchengröße zerkleinert und
- und schließlich in einem dritten Schritt den Rest der gewünschten Menge an Wasser sowie gegebenenfalls Zusatzstoffe, vorzugsweise Verdickungsmittel, unter Rühren zusetzt.

Die Temperaturen können bei der Durchführung des erfindungsgemäßen Verfahrens in einem bestimmten Bereich variiert werden. Im Allgemeinen arbeitet man im ersten Schritt des Verfahrens bei Temperaturen zwischen 20°C und 70°C, vorzugsweise zwischen 50°C und 60°C. Die folgenden Schritte werden im Allgemeinen bei Raumtemperatur durchgeführt. Es ist aber auch möglich, bei etwas höheren oder tieferen Temperaturen zu arbeiten.

Zur Durchführung des erfindungsgemäßen Verfahrens kommen Misch- und Mahlgeräte in Betracht, die üblicherweise zur Herstellung von agrochemischen Formulierungen eingesetzt werden.

Bei den erfindungsgemäßen Suspensionskonzentraten handelt es sich um Formulierungen, die auch nach längerer Lagerung bei erhöhten Temperaturen oder in der Kälte stabil bleiben, da kein Kristallwachstum beobachtet wird. Sie lassen sich durch Verdünnen mit Wasser in homogene Spritzflüssigkeiten überführen. Die Anwendung dieser Spritzflüssigkeiten erfolgt nach üblichen Methoden, also zum Beispiel durch Verspritzen, Gießen oder Injizieren.

Die Aufwandmenge an den erfindungsgemäßen Suspensionskonzentraten kann innerhalb eines größeren Bereiches variiert werden. Sie richtet sich nach den jeweiligen agrochemischen Wirkstoffen und nach deren Gehalt in den Formulierungen.

Mit Hilfe der erfindungsgemäßen Suspensionskonzentrate lassen sich agrochemische Wirkstoffe in besonders vorteilhafter Weise auf Pflanzen und/oder deren Lebensraum ausbringen. Die enthaltenen agrochemischen Wirkstoffe entfalten dabei eine bessere biologische Wirksamkeit als bei Applikation in Form der entsprechenden herkömmlichen Formulierungen.

Die erfindungsgemäßen Formulierungen weisen eine starke mikrobizide Wirkung auf und können zur Bekämpfung von unerwünschten Mikroorganismen, wie Fungi und Bakterien, im Pflanzenschutz und im Materialschutz eingesetzt werden.

Fungizide lassen sich im Pflanzenschutz beispielsweise zur Bekämpfung von Plasmodiophoromycetes, Oomycetes, Chytridiomycetes, Zygomycetes, Ascomycetes, Basidiomycetes und Deuteromycetes einsetzen.

Bakterizide lassen sich im Pflanzenschutz beispielsweise zur Bekämpfung von Pseudomonadaceae, Rhizobiaceae, Enterobacteriaceae, Corynebacteriaceae und Streptomycetaceae einsetzen.

Beispielhaft aber nicht begrenzend seien einige Erreger von pilzlichen und bakteriellen Erkrankungen, die unter die oben aufgezählten Oberbegriffe fallen, genannt:
Xanthomonas-Arten, wie beispielsweise Xanthomonas campestris pv. oryzae;
Pseudomonas-Arten, wie beispielsweise Pseudomonas syringae pv. lachrymans;
Erwinia-Arten, wie beispielsweise Erwinia amylovora;
Pythium-Arten, wie beispielsweise Pythium ultimum;
Phytophthora-Arten, wie beispielsweise Phytophthora infestans;
Pseudoperonospora-Arten, wie beispielsweise Pseudoperonospora humuli oder Pseudoperonospora cubensis;
Plasmopara-Arten, wie beispielsweise Plasmopara viticola;
Bremia-Arten, wie beispielsweise Bremia lactucae;
Peronospora-Arten, wie beispielsweise Peronospora pisi oder P. brassicae;
Erysiphe-Arten, wie beispielsweise Erysiphe graminis;
Sphaerotheca-Arten, wie beispielsweise Sphaerotheca fuliginea;
Podosphaera-Arten, wie beispielsweise Podosphaera leucotricha;
Venturia-Arten, wie beispielsweise Venturia inaequalis;
Pyrenophora-Arten, wie beispielsweise Pyrenophora teres oder P. graminea (Konidienform: Drechslera, Syn: Helminthosporium);
Cochliobolus-Arten, wie beispielsweise Cochliobolus sativus (Konidienform: Drechslera, Syn: Helminthosporium);
Uromyces-Arten, wie beispielsweise Uromyces appendiculatus;
Puccinia-Arten, wie beispielsweise Puccinia recondita;
Sclerotinia-Arten, wie beispielsweise Sclerotinia sclerotiorum;
Tilletia-Arten, wie beispielsweise Tilletia caries;
Ustilago-Arten, wie beispielsweise Ustilago nuda oder Ustilago avenae;
Pellicularia-Arten, wie beispielsweise Pellicularia sasakii;
Pyricularia-Arten, wie beispielsweise Pyricularia oryzae;
Fusarium-Arten, wie beispielsweise Fusarium culmorum;
Botrytis-Arten, wie beispielsweise Botrytis cinerea;
Septoria-Arten, wie beispielsweise Septoria nodorum;
Leptosphaeria-Arten, wie beispielsweise Leptosphaeria nodorum;
Cercospora-Arten, wie beispielsweise Cercospora canescens;
Altemaria-Arten, wie beispielsweise Altemaria brassicae;
Pseudocercosporella-Arten, wie beispielsweise Pseudocercosporella herpotrichoides.

Die erfindungsgemäßen Formulierungen weisen auch eine sehr gute stärkende Wirkung in Pflanzen auf. Sie eignen sich daher zur Mobilisierung pflanzeneigener Abwehrkräfte gegen Befall durch unerwünschte Mikroorganismen.

Unter unerwünschten Mikroorganismen sind im vorliegenden Fall phytopathogene Pilze und Bakterien zu verstehen. Die erfindungsgemäßen Formulierungen können also eingesetzt werden, um Pflanzen innerhalb eines gewissen Zeitraumes nach der Behandlung gegen den Befall durch die genannten Schaderreger zu schützen.

Die gute Pflanzenverträglichkeit der Formulierungen in den zur Bekämpfung von Pflanzenkrankheiten notwendigen Konzentrationen erlaubt eine Behandlung von oberirdischen Pflanzenteilen, von Pflanz- und Saatgut, und des Bodens.

Dabei lassen sich die erfindungsgemäßen Wirkstoffe mit besonders gutem Erfolg zur Bekämpfung von Getreidekrankheiten, wie beispielsweise gegen Erysiphe-Arten, von Krankheiten im Wein-, Obst- und Gemüseanbau, wie beispielsweise gegen Botrytis-, Venturia-, Sphaerotheca- und Podosphaera-Arten, einsetzen.

Die erfindungsgemäßen Formulierungen eignen sich auch zur Steigerung des Ernteertrages. Sie sind außerdem mindertoxisch und weisen eine gute Pflanzenverträglichkeit auf.

Erfindungsgemäß können alle Pflanzen und Pflanzenteile behandelt werden. Unter Pflanzen werden hierbei alle Pflanzen und Pflanzenpopulationen verstanden, wie erwünschte und unerwünschte Wildpflanzen oder Kulturpflanzen (einschließlich natürlich vorkommender Kulturpflanzen). Kulturpflanzen können Pflanzen sein, die durch konventionelle Züchtungs- und Optimierungsmethoden oder durch biotechnologische und gentechnologische Methoden oder Kombinationen dieser Methoden erhalten werden können, einschließlich der transgenen Pflanzen und einschließlich der durch Sortenschutzrechte schützbaren oder nicht schützbaren Pflanzensorten. Unter Pflanzenteilen sollen alle oberirdischen und unterirdischen Teile und Organe der Pflanzen, wie Spross, Blatt, Blüte und Wurzel verstanden werden, wobei beispielhaft Blätter, Nadeln, Stängel, Stämme, Blüten, Fruchtkörper, Früchte und Samen sowie Wurzeln, Knollen und Rhizome aufgeführt werden. Zu den Pflanzenteilen gehört auch Erntegut sowie vegetatives und generatives Vermehrungsmaterial, beispielsweise Stecklinge, Knollen, Rhizome, Ableger und Samen.

Die Erfindung wird durch die folgenden Beispiele veranschaulicht.

### Herstellungsbeispiele

### Beisniel 1

Zur Herstellung eines Suspensionskonzentrates werden
23 g Atlox 4913,
8 g Soprophor TS 60,
150 g Genapol C 100,
50 g Propylenglykol,
1 g Preventol D 7,
2 g Proxel GXL,
1 g Siliconöl und
315 g Wasser
miteinander vermischt und bei Temperaturen zwischen 50°C und 60°C so lange gerührt, bis eine homogene Lösung entsteht. Zu dieser Lösung werden unter Rühren bei Raumtemperatur 250 g Tebuconazole gegeben. Die dabei entstehende homogene Suspension wird zunächst einer Grob- und dann einer Feinmahlung unterworfen, so dass man eine Suspension enthält, in der 90 % Feststoffpartikel eine Teilchengröße unterhalb von 5 µ aufweisen. Anschließend fügt man unter Rühren bei Raumtemperatur
2 g Kelzane S und
198 g Wasser
hinzu. Es wird ein homogenes Suspensionskonzentrat erhalten.

### Beispiel 2

Zur Herstellung eines Suspensionskonzentrates werden
23 g Atlox 4913,
16 g Pluronic PE 10 500,
100 g Genapol C 100,
30 g Propylenglykol,
80 g Sonnenblumenöl,
2 g Butylhydroxytoluol,
1 g Preventol D 7,
2 g Proxel GXL,
1 g Siliconöl und
344 g Wasser
miteinander vermischt und bei Temperaturen zwischen 50°C und 60°C so lange gerührt, bis eine homogene Lösung entsteht. Zu dieser Lösung werden unter Rühren bei Raumtemperatur 250 g Tebuconazole gegeben. Die dabei entstehende homogene Suspension wird zunächst einer Grob- und dann einer Feinmahlung unterworfen, so dass man eine Suspension enthält, in der 90 % Feststoffpartikel eine Teilchengröße unterhalb von 5 µ aufweisen. Anschließend fügt man unter Rühren bei Raumtemperatur
1 g Kelzane S und
149 g Wasser
hinzu. Es wird ein homogenes Suspensionskonzentrat erhalten.

### Beispiele 3

Zur Herstellung eines Suspensionskonzentrates werden
23 g Atlox 4913,
4 g Soprophor TS 60,
100 g Genapol C 100,
50 g Propylenglykol,
1 g Preventol D 7,
2 g Proxel GXL,
1 g Siliconöl und
419 g Wasser
miteinander vermischt und bei Temperaturen zwischen 50°C und 60°C so lange gerührt, bis eine homogene Lösung entsteht. Zu dieser Lösung werden unter Rühren bei Raumtemperatur 200 g Trifloxystrobin gegeben. Die dabei entstehende homogene Suspension wird zunächst einer Grob- und dann einer Feinmahlung unterworfen, so dass man eine Suspension enthält, in der 90 % Feststoffpartikel eine Teilchengröße unterhalb von 5 µ aufweisen. Anschließend fügt man unter Rühren bei Raumtemperatur
3 g Kelzane S und
197 g Wasser
hinzu. Es wird ein homogenes Suspensionskonzentrat erhalten.

### Beispiel 4

Zur Herstellung eines Suspensionskonzentrates werden
40 g Atlox 4913,
4 g Soprophor TS 60,
100 g Genapol C 100,
50 g Glycerin
1 g Preventol D 7,
2 g Proxel GXL,
1 g Siliconöl und
446 g Wasser
miteinander vermischt und bei Temperaturen zwischen 50°C und 60°C so lange gerührt, bis eine homogene Lösung entsteht. Zu dieser Lösung werden unter Rühren bei Raumtemperatur 100 g Prothioconazole und 100 g Fluoxastrobin gegeben. Die dabei entstehende homogene Suspension wird zunächst einer Grob- und dann einer Feinmahlung unterworfen, so dass man eine Suspension enthält, in der 90 % Feststoffpartikel eine Teilchengröße unterhalb von 5 µ aufweisen. Anschließend fügt man unter Rühren bei Raumtemperatur
2 g Kelzane S und
148 g Wasser
hinzu. Es wird ein homogenes Suspensionskonzentrat erhalten.

### Beispiel 5

Zur Herstellung eines Suspensionskonzentrates werden
10 g Pluronic PE 10 500,
50 g Soprophor FLK,
100 g Genapol C 100,
100 g Harnstoff,
1 g Preventol D 7,
2 g Proxel GXL,
1 g Siliconöl und
286 g Wasser
miteinander vermischt und bei Temperaturen zwischen 50°C und 60°C so lange gerührt, bis eine homogene Lösung entsteht Zu dieser Lösung werden unter Rühren bei Raumtemperatur 200 g Tebuconazole und 100 g Trifloxystrobin gegeben. Die dabei entstehende homogene Suspension wird zunächst einer Grob- und dann einer Feinmahlung unterworfen, so dass man eine Suspension enthält, in der 90 % Feststoffpartikel eine Teilchengröße unterhalb von 5 µ aufweisen. Anschließend fügt man unter Rühren bei Raumtemperatur
2 g Kelzane S und
148 g Wasser
hinzu. Es wird ein homogenes Suspensionskonzentrat erhalten.

### Verwendungsbeispiele

### Beispiel A

### Leptosphaeria nodorum-Test (Winterweizen) / Protektiv

Die folgenden anwendungsfertigen Spritzmittel werden hergestellt, indem man
- ein handelsübliches Tebuconazole-Emulsionskonzentrat (= Formulierung I),
- Suspensionskonzentrat gemäß Beispiel 1 (= Formulierung II) und
- Suspensionskonzentrat gemäß Beispiel 2 (= Formulierung II)
mit der jeweils gewünschten Menge an Wasser verdünnt.

Im Freiland werden Winterweizen-Pflanzen im Zweiblatt-Stadium mit den Wirkstoffzubereitungen in einer solchen Aufwandmenge bespritzt, dass die in der folgenden Tabelle angegebenen Mengen an Wirkstoff pro Hektar ausgebracht werden. Einen Tag nach der Behandlung werden die Pflanzen mit einer Sporen-Suspension von Leptosphaeria nodorum inokuliert.

Die Auswertung erfolgt nach 3 Wochen, indem man den Befall der Pflanzen ermittelt und in Prozent ausdrückt. Dabei bedeutet 0 %, dass kein Befall beobachtet wird, und 100 % ein Befall, der demjenigen der unbehandelten Kontrolle entspricht.

Formulierungen, Aufwandmengen an Wirkstoff und Versuchsergebnisse gehen aus der folgenden Tabelle hervor.

**Tabelle A**

| Leptosphaeria nodorum (Winterweizen) / protektiv | | |
|---|---|---|
| Formulierung | Aufwandmenge an Tebuconazole in g/ha | Befallsgrad in % |
| - | 0 | 100 |
| (Kontrolle) | | |
| Bekannt: | 250 | 3 |
| (I) | 125 | 25 |
| | 62,5 | 35 |
| Erfindungsgemäß: | 250 | 12 |
| (II) | 125 | 27 |
| | 62,5 | 29 |
| Erfindungsgemäß- | 250 | 6 |
| (III) | 125 | 28 |
| | 62,5 | 34 |

### Beispiele B

### Erysiphe-Test (Winterweizen) / protektiv

Die folgenden anwendungsfertigen Spritzmittel werden hergestellt, indem man
- ein handelsübliches Tebuconazole-Emulsionskonzentrat (= Formulierung (I),
- Suspensionskonzentrat gemäß Beispiel 1 (= Formulierung II) und
- Suspensionskonzentrat gemäß Beispiel 2 (= Formulierung III)
mit der jeweils gewünschten Menge an Wasser verdünnt.

Im Freiland werden Winterweizen-Pflanzen im Einblatt-Stadium mit den Wirkstoffzubereitungen in einer solchen Aufwandmenge bespritzt, dass die in der folgenden Tabelle angegebenen Mengen an Wirkstoff pro Hektar ausgebracht werden. Einen Tag nach der Behandlung werden die Pflanzen mit Sporen von Erysiphe graminis f. sp. tritici bestäubt.

Die Auswertung erfolgt nach 3 Wochen, indem man den Befall der Pflanzen ermittelt und in Prozent ausdrückt. Dabei bedeutet 0 %, dass kein Befall beobachtet wird, und 100 % ein Befall, der demjenigen der unbehandelten Kontrolle entspricht.

Formulierungen, Aufwandmengen an Wirkstoff und Versuchsergebnisse gehen aus der folgenden Tabelle hervor.

**Tabelle B**

| Erysiphe-Test (Winterweizen) / protektiv | | |
|---|---|---|
| Formulierung | Aufwandmenge an Tebuconazole in g/ha | Befallsgrad in % |
| - | 0 | 100 |
| (Kontrolle) | | |
| Bekannt: | 250 | 3 |
| (I) | 125 | 6 |
| | 62,5 | 33 |
| Erfindungsgemäß: | 250 | 9 |
| (II) | 125 | 9 |
| | 62,5 | 18 |
| Erfindunssgemäß: | 250 | 3 |
| (III) | 125 | 6 |
| | 62,5 | 6 |

## Patentansprüche

1. Suspensionskonzentrate, **gekennzeichnet durch** einen Gehalt an
a) mindestens einem bei Raumtemperatur festen Wirkstoff aus der Gruppe der Azole und/oder der Strobilurine,
b) mindestens einem Penetrationsförderer aus der Gruppe der Alkanolethoxylate der Formel 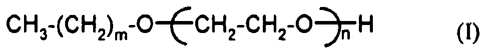 in welcher
m für Zahlen von 9 bis 17 steht und
n für Zahlen von 8 bis 16 steht,
c) mindestens einem Dispergiermittel aus der Gruppe
der Polymerisate aus 2-Methyl-2-propensäure-methylester und α-(2-Methyl-1-oxo-2-propenyl)-ω-methoxy-poly-(oxy-1,2-ethandiyl),
der Tristyryl-phenol-ethoxylate und/oder
der Propylenoxid-Ethylenoxid-Blockcopolymerisate mit Molekulargewichten zwischen 8 000 und 10 000,
d) Wasser sowie
e) gegebenenfalls Zusatzstoffen.

2. Suspensionskonzentrate gemäß Anspruch 1, **dadurch gekennzeichnet, dass**
a) Triazole:
Azaconazole, Bitertanol, Bromuconazole, Cyproconazole, Diclobutrazole, Difenocoriazole, Diniconazole, Epoxiconazole, Etaconazole, Fenbuconazole, Fluquinconazole, Flusilazole, Flutriafol, Hexaconazole, lmibenconazole, Ipconazole, Metconazole, Myclobutanil, Paclebutrazol, Penconazole, Propiconazole, Prothioconazole, Simeconazole, Tebuconazole, Tetraconazole, Triadimefon, Triadimenol, Triticonazole;
und
b) Imidazole:
Imazalil, Oxpoconazole Fumarat, Peforazoate, Prochloraz, Triflumizole als Wirkstoffe der Gruppe (a) enthalten sind.

3. Suspensionskonzentrate gemäß Anspruch 1, **dadurch gekennzeichnet, dass** Azoxystrobin, Dimoxystrobin, Famoxadon, Fenamidon, Fluoxastrobin, Kresoxim-methyl, Metaminostrobin, Picoxystrobin, Pyraclostrobin und Trifloxystrobin als Wirkstoff der Gruppe (a) enthalten ist.

4. Suspensionskonzentrate gemäß Anspruch 1, **dadurch gekennzeichnet, dass** Tebuconazole als Wirkstoff der Gruppe (a) enthalten ist.

5. Suspensionskonzentrate gemäß Anspruch 1, **dadurch gekennzeichnet, dass** Tebuconazole und Trifloxystrobin als Wirkstoffe der Gruppe (a) enthalten sind.

6. Suspensionskonzentrate gemäß Anspruch 1, **dadurch gekennzeichnet, dass** Prothioconazole und Fluoxastrobin als Wirkstoffe der Gruppe (a) enthalten sind.

7. Suspensionskonzentrate gemäß Anspruch 1, **dadurch gekennzeichnet, dass** Trifloxystrobin als Wirkstoff der Gruppe (a) enthalten ist.

8. Suspensionskonzentrate gemäß Anspruch 1, **dadurch gekennzeichnet, dass** zwei Dispergiermittel aus der Gruppe (c) enthalten sind.

9. Verfahren zur Herstellung von Suspensionskonzentraten gemäß Anspruch 1, **dadurch gekennzeichnet, dass** man
• zunächst Penetrationsförderer aus der Gruppe (b), Dispergiermittel aus der Gruppe (c) sowie Wasser und gegebenenfalls Zusatzstoffe aus der Gruppe (e) miteinander vermischt,
• dann mindestens einen Wirkstoff aus der Gruppe (a) hinzufügt, die dabei entstehende Suspension durch Mahlen zerkleinert und
• danach Wasser sowie gegebenenfalls weitere Zusatzstoffe hinzugibt.

10. Verwendung von Suspensionskonzentraten gemäß Anspruch 1 zur Applikation der enthaltenen agrochemischen Wirkstoffe auf Pflanzen und/oder deren Lebensraum.

11. Suspensionskonzentrate nach Anspruch 1, **gekennzeichnet durch** einen Gehalt an b) mindestens einem Penetrationsförderer aus der Gruppe der Alkanolethoxylate der Formel 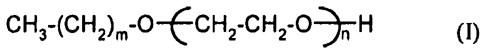 in welcher
m für Zahlen von 9 bis 13 steht und
n für Zahlen von 8 bis 12 steht.

12. Suspensionskonzentarte nach Anspruch 1,. **gekennzeichnet durch** einen Gehalt an b) mindestens einem Penetrationsförderer aus der Gruppe der Alkanolethoxylate der Formel 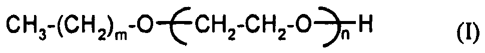 in welcher
m für 11 steht und
n für 10 steht.

## Claims

1. Suspension concentrates, **characterized in that** they comprise
a) at least one active compound, solid at room temperature, from the group of the azoles and/or the strobilurins,
b) at least one penetration enhancer from the group of the alkanolethoxylates of the formula 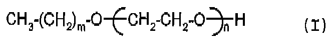 in which
m represents numbers from 9 to 17 and
n represents numbers from 8 to 16,
c) at least one dispersant from the group
of the polymers of methyl 2-methyl-2-propenoate and α-(2-methyl-1-oxo-2-propenyl)-ω-methoxypoly(oxy-1,2-ethanediyl),
the tristyrylphenolethoxylates and/or
the propylene oxide/ethylene oxide block copolymers having molecular weights between 8000 and 10 000,
d) water and also
e) additives, if appropriate.

2. Suspension concentrates according to Claim 1, **characterized in that** they comprise, as active compounds of group (a),
a) triazoles:
azaconazole, bitertanol, bromuconazole, cyproconazole, diclobutrazole, difenoconazole, diniconazole, epoxiconazole, etaconazole, fenbuconazole, fluquinconazole, flusilazole, flutriafol, hexaconazole, imibenconazole, ipconazole, metconazole, myclobutanil, paclebutrazol, penconazole, propiconazole, prothioconazole, simeconazole, tebuconazole, tetraconazole, triadimefon, triadimenol, triticonazole;
and
b) imidazoles:
imazalil, oxpoconazole fumarate, peforazoate, prochloraz, triflumizole.

3. Suspension concentrates according to Claim 1, **characterized in that** they comprise, as active compound of group (a), azoxystrobin, dimoxystrobin, famoxadone, fenamidone, fluoxastrobin, kresoxim-methyl, metaminostrobin, picoxystrobin, pyraclostrobin and trifloxystrobin.

4. Suspension concentrates according to Claim 1, **characterized in that** they comprise, as active compound of group (a), tebuconazole.

5. Suspension concentrates according to Claim 1, **characterized in that** they comprise, as active compounds of group (a), tebuconazole and trifloxystrobin.

6. Suspension concentrates according to Claim 1, **characterized in that** they comprise, as active compounds of group (a), prothioconazole and fluoxastrobin.

7. Suspension concentrates according to Claim 1, **characterized in that** they comprise, as active compound of group (a), trifloxystrobin.

8. Suspension concentrates according to Claim 1, **characterized in that** they comprise two dispersants from group (c).

9. Process for preparing suspension concentrates according to Claim 1, **characterized in that**
• initially penetration enhancers from the group (b), dispersants from the group (c) and also water and, if appropriate, additives from the group (e) are mixed,
• at least one active compound from the group (a) is then added, the resulting suspension being comminuted by grinding, and
• water and, if appropriate, further additives are then added.

10. Use of suspension concentrates according to Claim 1 for applying the agrochemically active compounds comprised therein to plants and/or their habitat.

11. Suspension concentrates according to Claim 1, **characterized in that** they comprise b) at least one penetration enhancer from the group of the alkanolethoxylates of the formula 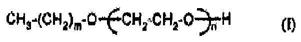 in which
m represents numbers from 9 to 13 and
n represents numbers from 8 to 12.

12. Suspension concentrates according to Claim 1, **characterized in that** they comprise b) at least one penetration enhancer from the group of the alkanolethoxylates of the formula 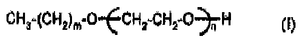 in which
m represents 11 and
n represents 10.

## Revendications

1. Suspensions concentrées, **caractérisées par** une teneur en
a) au moins un agent actif solide à température ambiante du groupe des azoles et/ou des strobilurines,
b) au moins un promoteur de pénétration du groupe des éthoxylates d'alcanol de formule 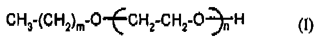 dans laquelle
m représente des nombres de 9 à 17 et
n représente des nombres de 8 à 16,
c) au moins un agent dispersant du groupe des polymères de l'ester méthylique de l'acide 2-méthyl-2-propénoïque et de l'α-(2-méthyl-1-oxo-2-propényl)-ω-méthoxy-poly-(oxy-1,2-éthanediyle), des éthoxylates de tristyryl-phénol et/ou des copolymères séquencés d'oxyde de propylène-oxyde d'éthylène de poids moléculaires compris entre 8 000 et 10 000,
d) de l'eau et
e) éventuellement des additifs.

2. Suspensions concentrées selon la revendication 1, **caractérisées en ce que**
a) des triazoles :
azaconazole, bitertanol, bromuconazole, cyproconazole, diclobutrazole, difénoconazole, diniconazole, époxiconazole, étaconazole, fenbuconazole, fluquinconazole, flusilazole, flutriafol, hexaconazole, imibenconazole, ipconazole, metconazole, myclobutanil, paclébutrazol, penconazole, propiconazole, prothioconazole, siméconazole, tébuconazole, tétraconazole, triadiméfon, triadiménol, triticonazole ;
et
b) des imidazoles ;
imazalil, fumarate d'oxpoconazole, péforazoate, prochloraz, triflumizole
sont contenus en tant qu'agents actifs du groupe (a).

3. Suspensions concentrées selon la revendication 1, **caractérisées en ce que** l'azoxystrobine, la dimoxystrobine, la famoxadone, la fénamidone, la fluoxastrobine, le krésoximméthyle, la métaminostrobine, la picoxystrobine, la pyraclostrobine et la trifloxystrobine sont contenus en tant qu'agent actif du groupe (a).

4. Suspensions concentrées selon la revendication 1, **caractérisées en ce que** le tébuconazole est contenu en tant qu'agent actif du groupe (a).

5. Suspensions concentrées selon la revendication 1, **caractérisées en ce que** le tébuconazole et la trifloxystrobine sont contenus en tant qu'agents actifs du groupe (a).

6. Suspensions concentrées selon la revendication 1, **caractérisées en ce que** le prothioconazole et la fluoxastrobine sont contenus en tant qu'agents actifs du groupe (a),

7. suspensions concentrées selon la revendication 1, **caractérisées en ce que** la trifloxyatrobine est contenue en tant qu'agent actif du groupe (a),

8. Suspensions concentrées selon la revendication 1, **caractérisées en ce que** deux agents dispersants du groupe (c) sont contenus.

9. Procédé de fabrication de suspensions concentrées selon la revendication 1, **caractérisé en ce que**
- les promoteurs de pénétration du groupe (b), les agents dispersants du groupe (c), ainsi que l'eau et éventuellement les additifs du groupe (e) sont tout d'abord mélangés les uns avec les autres,
- puis au moins un agent actif du groupe (a) est ajouté, la suspension ainsi formée est concassée par broyage, puis
- de l'eau et éventuellement d'autres additifs sont ajoutés.

10. Utilisation de suspensions concentrées selon la revendication 1 pour l'application des agents actifs agrochimiques contenus sur des plantes et/ou leur habitat.

11. Suspensions concentrées selon la revendication 1, **caractérisées par** une teneur en b) au moins un promoteur de pénétration du groupe des éthoxylates d'alcanol de formule 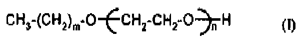 dans laquelle
m représente des nombres de 9 à 13 et
n représente des nombres de 8 à 12.

12. Suspensions concentrées selon la revendication 1, **caractérisées par** une teneur en b) au moins un promoteur de pénétration du groupe des éthoxylates d'alcanol de formule 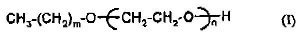 dans laquelle
m représente 11 et
n représente 10.
